(19) Europäisches Patentamt / European Patent Office / Office européen des brevets

(11) **EP 3 109 608 A1**

(12) **EUROPEAN PATENT APPLICATION**

(43) Date of publication:
**28.12.2016 Bulletin 2016/52**

(51) Int Cl.:
**G01K 13/02** (2006.01)      **G01K 15/00** (2006.01)

(21) Application number: **16175711.7**

(22) Date of filing: **22.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.06.2015 US 201514745798**

(71) Applicant: **Rosemount Aerospace Inc.**
**Burnsville MN 55306-4898 (US)**

(72) Inventors:
• **SCHWIE, Chester**
  **Burnsville, MN 55337 (US)**
• **DAUP, Michael Robert**
  **Bloomington, MN 55431 (US)**
• **NELSON, Jordan William**
  **Savage, MN 5378 (US)**

(74) Representative: **Bridge, Kerry Ann**
**Dehns**
**St Bride's House**
**10 Salisbury Square**
**London EC4Y 8JD (GB)**

(54) **AIRCRAFT TOTAL AIR TEMPERATURE ANOMALY DETECTION**

(57)   An example method includes receiving, by a computing device (10), an indication of a measured total air temperature (TAT) (26) from a temperature probe installed on an aircraft. The method further includes determining, by the computing device (10), a theoretical temperature corresponding to conditions at which the TAT is measured, and determining, by the computing device, a measured TAT anomaly condition based on the measured TAT and the theoretical temperature corresponding to the conditions at which the TAT is measured.

Fig. 1

**Description**

BACKGROUND

The present disclosure relates generally to aircraft operational anomaly detection, and in particular to techniques for determining a measured total air temperature anomaly condition.

Many modern aircraft utilize data collected from various sensors and computing devices positioned throughout the aircraft. Such data can include, among others, pressure and temperature data collected by, e.g., various pressure sensors (e.g., pitot-static probes) and temperature sensors configured to sense pressure and temperature of air around the fuselage of the aircraft. For instance, an air data computer (ADC) can utilize total pressure ($P_t$) and static pressure ($P_s$) sensed by, e.g., one or more pitot-static probes, for calculating various air data parameters, such as a standard altitude and the Mach number of the aircraft. In addition, the ADC, as well as other consuming systems, can utilize measured total air temperature (TAT) received from one or more temperature probes (e.g., TAT probes) positioned about the exterior of the aircraft. As an example, consuming systems of TAT measurements can include flight management systems (e.g., for use with waypoint routing, fuel burn calculations, true airspeed calculations, or for determining other such parameters), primary engine control systems, aircraft flight control systems (e.g., for use with air data gain scheduling), enhanced vision systems, cabin data servers (e.g., for displaying various air data to passengers), or other aircraft systems. As such, measured TAT signals can be useable by a variety of air data or other such systems of the aircraft for determination, monitoring, and/or control of operational parameters of the aircraft.

Anomalous (e.g., incorrect) measurements of TAT can compromise the integrity of the calculations of the various TAT-consuming systems, thereby possibly resulting in sub-optimal flight performance of the aircraft. Such TAT anomalies can result from, e.g., a mechanical or electrical fault of the one or more TAT probes, icing conditions of the one or more TAT probes, or other such malfunctions. In some instances, icing conditions or other malfunctions can result in measured TAT signals that, while anomalous (i.e., erroneous), are still within normal temperature ranges of the aircraft operating envelope, thereby increasing the difficulty of detection of the measured TAT anomaly. Nevertheless, it may be possible for consuming systems of the measured TAT signal to continue operation within normal operative boundaries (albeit possibly under less optimal conditions), such as via modified operational algorithms based on TAT-independent parameters, if notified of the measured TAT anomaly condition. Accordingly, increased robustness of measured TAT anomaly (e.g., error) detection can help improve operational performance characteristics of the aircraft.

SUMMARY

In one example, a method includes receiving, by a computing device, an indication of a measured total air temperature (TAT) from a temperature probe installed on an aircraft. The method further includes determining, by the computing device, a theoretical temperature corresponding to conditions at which the TAT is measured, and determining, by the computing device, a measured TAT anomaly condition based on the measured TAT and the theoretical temperature corresponding to the conditions at which the TAT is measured.

In another example, a computing device includes at least one processor and computer-readable memory. The computer-readable memory is encoded with instructions that, when executed by the at least one processor, cause the computing device to receive an indication of a measured total air temperature (TAT) from a temperature probe installed on an aircraft, and determine a theoretical temperature corresponding to conditions at which the TAT is measured. The computer-readable memory is further encoded with instructions that, when executed by the at least one processor, cause the computing device to determine a measured TAT anomaly condition based on the measured TAT and the theoretical temperature corresponding to conditions at which the TAT is measured.

BRIEF DESCRIPTION OF THE DRAWINGS

FIG. 1 is a block diagram illustrating an example computing device that can determine a measured total air temperature (TAT) anomaly condition.
FIG. 2 is a flow diagram illustrating example operations to determine a measured TAT anomaly condition.
FIG. 3 is a block diagram illustrating an example computing device installed that can determine a measured TAT anomaly condition installed on an aircraft.

DETAILED DESCRIPTION

According to techniques of this disclosure, a computing device of an aircraft, such as an air data computer (ADC), can detect an anomaly condition of a measured total air temperature (TAT) based on the measured TAT and a theoretical temperature corresponding to the TAT. The anomaly condition can be due to, e.g., an icing condition of a temperature sensor of a TAT probe, a mechanical or electrical fault of the TAT probe, or other such malfunction. As an example, the computing device can determine a theoretical TAT, such as a TAT based on the international standard atmosphere (ISA) model as a function of the altitude and Mach number of the aircraft that are determined based on measured values, such as measured total pressure ($P_t$) and measured static pressure ($P_s$) of the air around the skin of the fuselage of the aircraft. The computing device can determine the anomaly condition in response to determining that the measured TAT exceeds a threshold deviation from the theoretical TAT, that a rate of change of a difference between the measured TAT and the theoretical TAT exceeds a threshold deviation rate, or that corresponding static air temperature (SAT) measurements (e.g., theoretical SAT, such as ISA SAT, and measured SAT determined based on the measured TAT) exceed threshold deviations or associated deviation rates.

The computing device can determine, in certain examples, the anomaly condition in response to determining that a ratio of the rate of change of the measured TAT to the rate of change of the theoretical TAT (e.g., ISA TAT) exceeds a threshold deviation. As such, because each of the numerator and denominator of the ratio are functions of both altitude and Mach of the aircraft, such altitude and Mach effects on the TAT can be effectively removed from the anomaly detection criteria, thereby enabling efficient TAT anomaly detection at a range of altitudes and Mach numbers, as well as during rapid changes of either or both. Accordingly, techniques of this disclosure can enable efficient detection of an anomaly condition of a measured TAT at a variety of flight conditions, thereby increasing robustness of error detection and the corresponding safety of flight-critical air data.

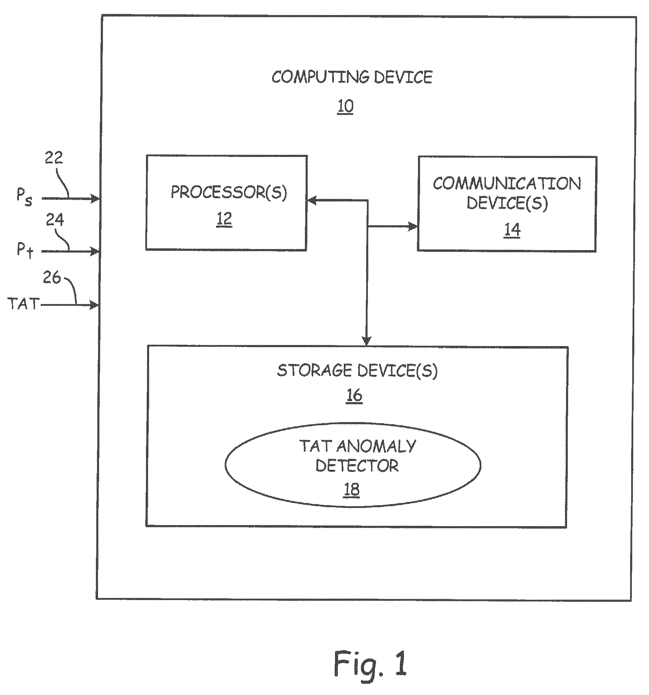

FIG. 1 is a block diagram illustrating an example of computing device 10 that can determine a measured total air temperature (TAT) anomaly condition. As illustrated in FIG. 1, computing device 10 can include one or more processor 12, one or more communication devices 14, and one or more storage devices 16. One or more storage devices 16 can include TAT anomaly detector 18.

Computing device 10 can be any device including processing and interface circuitry configured to send and receive data corresponding to aircraft operational data and to determine a measured TAT anomaly condition, as is further described below. For instance, computing device 10 can be an air data computer (ADC) or other such computing device configured to be installed on an aircraft, such as a commercial, civil, and/or military manned or unmanned aerial vehicle.

One or more processors 12, in one example, are configured to implement functionality and/or process instructions for execution within computing device 10. For instance, processor 12 can be capable of processing instructions stored in storage device 16. Examples of processor 12 can include any one or more of a microprocessor, a controller, a digital signal processor (DSP), an application specific integrated circuit (ASIC), a field-programmable gate array (FPGA), or other equivalent discrete or integrated logic circuitry.

One or more storage devices 16 can be configured to store information within computing device 10 during operation. Storage device 16, in some examples, is described as a computer-readable storage medium. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, storage device 16 is a temporary memory, meaning that a primary purpose of storage device 16 is not long-term storage. Storage device 16, in some examples, is described as a volatile memory, meaning that storage device 16 does not maintain stored contents when power to computing device 10 is turned off. Examples of volatile memories can include random access memories (RAM), dynamic random access memories (DRAM), static random access memories (SRAM), and other forms of volatile memories. In some examples, storage device 16 is used to store program instructions for execution by processor 12. Storage device 16, in one example, is used by TAT anomaly detector 18 executing on processor 12 to temporarily store information during execution.

Storage device 16, in some examples, also includes one or more computer-readable storage media. Storage device 16 can be configured to store larger amounts of information than volatile memory. Storage device 16 can further be configured for long-term storage of information. In some examples, storage device 16 includes non-volatile storage elements. Examples of such non-volatile storage elements can include magnetic hard discs, optical discs, floppy discs, flash memories, or forms of electrically programmable memories (EPROM) or electrically erasable and programmable (EEPROM) memories.

As illustrated in FIG. 1, computing device 10 also includes one or more communication devices 14. Computing device 10, in one example, utilizes communication device 14 to communicate with external devices via one or more wired or wireless networks, or both. Examples of such networks can include serial data networks (or data busses) for communication via the Aeronautical Radio, Incorporated (ARINC) 429, 717, or other such protocols. In certain examples, such networks can include wireless networks, such as wireless radio communication networks, cellular networks, or other wireless networks. Communication device 14 can be a network interface card, such as an Ethernet card, an optical transceiver, a radio frequency transceiver, or any other type of device that can send and receive information. Other examples of such network interfaces can include Bluetooth, 3G, 4G, and WiFi radio computing devices as well as Universal Serial Bus (USB). In some examples, communication device 14 includes one or more discrete input and/or output pins. Each of components 10, 12, 14, and 16 can be interconnected (physically, communicatively, electrically, and/or operatively) for inter-component communications, such as via communication channels 20.

As schematically illustrated in FIG. 1, computing device 10 can be configured to receive static pressure signal ($P_s$) 22, total pressure signal ($P_t$) 24, and measured TAT signal 26. $P_s$ 22 can be indicative of the static pressure (e.g., the atmospheric pressure at the altitude at which the aircraft is flying) of the air around the skin of the fuselage. $P_t$ 24 can be indicative of the total pressure (sometimes referred to as the "pitot pressure" or "stagnation pressure") of the air around the skin of the fuselage. Measured TAT signal 26 can be indicative of the TAT of the air around the skin of the fuselage. Computing device 10 can utilize any one more of $P_s$ 22, $P_t$ 24, and measured TAT 26 to calculate a variety of air data parameters, such as altitude (e.g., pressure altitude above mean sea level), Mach number, airspeed (e.g., calculated airspeed (CAS), true airspeed (TAS), or other airspeed indications), static air temperature (SAT), TAT (e.g., a theoretical TAT based on determined altitude and Mach number), or other air data parameters.

In some examples, computing device 10 can receive $P_s$ 22 and $P_t$ 24 as direct pressure measurements (e.g., via pneumatic lines), and can determine corresponding air data parameters, such as altitude and Mach number, using the received pressures. In other examples, computing device 10 can receive data indicative of the sensed pressures $P_s$ 22 and $P_t$ 24, such as from a remote computing device via, e.g., ARINC 429 communications. In yet other examples, computing device 10 can receive indications of air data parameters calculated by a remote computing device, such as indications of altitude, airspeed, Mach number, or other air data parameters via, e.g., an ARINC 429 or other communications interface (e.g., via communication device 14). Measured TAT 26 can be, in some examples, a voltage or other signal indicative of a TAT measured by a temperature probe installed on an aircraft. In other examples, computing device 10 can received measured TAT 26 via one or more data communications messages, such as ARINC 429 communications messages via communication device 14.

TAT anomaly detector 18, executing on processor 12 of computing device 10, can determine a measured TAT anomaly condition based on received measured TAT 26 and a theoretical temperature corresponding to conditions at which measured TAT 26 is measured. For example, the theoretical temperature can be a theoretical TAT determined based on, e.g., the International Standard Atmosphere (ISA) model that describes the relationship between air temperature and altitude. For instance, TAT anomaly detector 18 can determine a theoretical SAT for use in determining the theoretical TAT based on the ISA model according to the following equation:

$$\text{IF (altitude} < 11{,}019 \text{ m)}$$

$$SAT = 15\,°C - 0.0065\frac{°C}{m} \times altitude$$

$$\text{ELSE IF (altitude} < 20{,}063 \text{ m)}$$

$$SAT = -56.5°C \qquad\qquad \text{(Equation 1)}$$

where "SAT" is the theoretical static air temperature (i.e., the freestream ambient air temperature with condition averages that have been characterized by the ISA model) in degrees Celsius, and "altitude" is the measured base geometric height above mean sea level (MSL) in meters (e.g., a current altitude of the aircraft determined using $P_s$ 22). In certain examples, rather than determine SAT directly from Equation 1, TAT anomaly detector 18 can determine SAT using tables or other data structures derived from (or otherwise functionally equivalent to) Equation 1, such as by utilizing interpolation and/or extrapolation techniques to derive the SAT from discrete values included in the tables.

TAT anomaly detector 18 can determine a theoretical TAT (e.g., ISA_TAT) based on the theoretical SAT determined using, e.g., Equation 1 above, according to the following equation:

$$ISA\_TAT = SAT \times (1 + 0.2 \times M^2) \qquad \text{(Equation 2)}$$

where "ISA_TAT" is the theoretical TAT (i.e., with condition averages that have been characterized by the ISA model), "SAT" is the theoretical static air temperature determined using, e.g., Equation 1, and "M" is the measured (e.g., current) Mach number of the aircraft determined using, for example, $P_t$ 24. Accordingly, TAT anomaly detector 18 can determine a theoretical TAT corresponding to altitude and Mach number conditions at which measured TAT 26 is measured.

In some examples, TAT anomaly detector 18 can determine a measured TAT anomaly condition based on a comparison of measured TAT 26 and the theoretical ISA_TAT determined according to Equation 2. For example, TAT anomaly detector 18 can determine a measured TAT anomaly condition in response to determining that measured TAT 26 (e.g., received from a TAT probe) exceeds a threshold deviation from the determined theoretical TAT, such as a deviation of ten, twenty, thirty, forty, or other whole or fractional deviations of temperatures between measured TAT 26 and the determined ISA_TAT. Accordingly, TAT anomaly detector 18 can determine a TAT anomaly condition corresponding to an anomalous (e.g., erroneous) measured TAT 26. In response, TAT anomaly detector 18 can output an indication, such as a data message or other indication using communication device 14 to notify consuming systems of measured TAT 26 (e.g., flight controls systems, flight management systems, engine controls systems, enhanced vision systems, cabin server systems, or other consuming systems) of the presence of the anomaly condition corresponding to measured TAT 26.

In certain examples, TAT anomaly detector 18 can determine a measured TAT anomaly condition based on a rate of change of a difference between measured TAT 26 and the theoretical TAT (e.g., ISA_TAT determined using Equation 2). For instance, TAT anomaly detector 18 can determine a difference between the determined ISA_TAT and measured TAT 26 at each of a first time and a second time, and can determine the rate of change of the difference using, e.g., a finite difference equation (e.g., a forward, backward, or central finite difference equation). TAT anomaly detector 18 can determine the measured TAT anomaly condition corresponding to measured TAT 26 in response to determining that the determined rate of change of the difference between measured TAT 26 and the theoretical TAT (e.g., ISA_TAT) with respect to time exceeds a threshold deviation rate, such as a deviation rate of one degree per second, five degrees per second, ten degrees per second, or other whole or fractional deviation rates.

In some examples, TAT anomaly detector 18 can determine a measured TAT anomaly condition corresponding to measured TAT 26 based on a ratio of a rate of change of measured TAT 26 to a rate of change of the determined theoretical TAT (e.g., ISA_TAT). For instance, TAT anomaly detector 18 can determine a measured TAT rate as a rate of change of measured TAT 26 with respect to time, such as via a finite difference equation or other differentiation (or differentiation approximation) technique. TAT anomaly detector 18 can determine a theoretical TAT rate as a rate of change of the determined theoretical TAT (e.g., ISA_TAT) with respect to time. TAT anomaly detector 18 can determine a ratio of the measured TAT rate to the theoretical TAT rate, and can determine a measured TAT anomaly condition corresponding to measured TAT 26 in response to determining that the ratio of the measured TAT rate to the theoretical TAT rate exceeds a threshold ratio deviation, such as a ratio deviation of one, two, ten, or other whole or fractional threshold ratio deviations. As an example, TAT anomaly detector 18 can determine the ratio of the measured TAT rate to the theoretical TAT rate according to the following equation:

$$\frac{dTAT}{dISA\_TAT} = \frac{TAT_{t2} - TAT_{t1}}{ISA\_TAT_{t2} - ISA\_TAT_{t1}} \qquad \text{(Equation 3)}$$

where "$TAT_{t1}$" is a value of measured TAT 26 at a first time, "$TAT_{t2}$" is a value of measured TAT 26 at a second time that is later than the first time, "$ISA\_TAT_{t1}$" is a value of the theoretical TAT (i.e., ISA_TAT determined according to, e.g., Equation 2) at the first time, and "$ISA\_TAT_{t2}$" is a value of the theoretical TAT (i.e., ISA_TAT determined according to, e.g., Equation 2) at the second time. Because TAT (e.g., measured TAT 26) is dependent upon both the Mach and altitude conditions of the aircraft, and the theoretical TAT (e.g., ISA_TAT) determined according to, e.g., Equations 1 and 2 above is a function of both the Mach and altitude conditions of the aircraft, each of the numerator (i.e., dTAT) and denominator (i.e., dISA_TAT) of Equation 3 are functions of both Mach and altitude of the aircraft. As such, the ratio of the measured TAT rate to the theoretical TAT rate of Equation 3 (i.e., $\frac{dTAT}{dISA\_TAT}$) is independent of both Mach number and altitude. That is, the ratio of the measured TAT rate to the theoretical TAT rate cancels the effects of Mach number and altitude from both the numerator and the denominator. In this way, the ratio of Equation 3 can enable TAT anomaly detector 18 to determine a measured TAT anomaly condition corresponding to measured TAT 26 at a plurality of altitudes and Mach numbers, without requiring additional considerations or algorithmic details to account for the effects of Mach number and altitude on measured TAT 26.

In certain examples, TAT anomaly detector 18 can determine a measured TAT anomaly condition based on received measured TAT 26 and a theoretical SAT. For instance, TAT anomaly detector 18 can determine a theoretical SAT based on the ISA model according to Equation 1 above. In addition, TAT anomaly detector 18 can determine a measured SAT based on measured TAT 26 according to the following equation:

$$SAT_{measured} = \frac{TAT}{1+0.2\times M^2} \qquad \text{(Equation 4)}$$

where "TAT" is a value of measured TAT 26, and "M" is the measured (e.g., current) Mach number of the aircraft determined using, for example, $P_t$ 24.

TAT anomaly detector 18 can determine a measured TAT anomaly condition based on a comparison of the measured SAT (e.g., $SAT_{measured}$ determined according to Equation 4) to the theoretical SAT determined according to Equation 1. For instance, TAT anomaly detector 18 can determine a TAT anomaly condition corresponding to measured TAT 26 in response to determining that the measured SAT exceeds a threshold deviation from the theoretical SAT, such as a deviation of ten, twenty, thirty, forty, or other whole or fractional deviations of temperatures between the measured SAT and the theoretical SAT.

In some examples, TAT anomaly detector 18 can determine a measured TAT anomaly condition in response to determining that a rate of change of a difference between the measured SAT and the theoretical SAT with respect to time exceeds a threshold deviation rate. For instance, TAT anomaly detector 18 can determine a difference between the theoretical SAT (e.g., determined using Equation 1) and the measured SAT (e.g., determined using Equation 4) at each of a first time and a second time, and can determine the rate of change of the difference using, e.g., a finite difference equation (e.g., a forward, backward, or central finite difference equation). TAT anomaly detector 18 can determine the measured TAT anomaly condition corresponding to measured TAT 26 in response to determining that the determined rate of change of the difference between the measured SAT and the theoretical SAT with respect to time exceeds a threshold deviation rate, such as a deviation rate of one degree per second, five degrees per second, ten degrees per second, or other whole or fractional deviation rates. Accordingly, TAT anomaly detector 18 can determine a TAT anomaly condition in response to a deviation (or deviation rate) between a theoretical SAT and a SAT that is determined based on measured TAT 26.

In some examples, TAT anomaly detector 18 can determine a measured TAT anomaly condition corresponding to measured TAT 26 based on a combination of any one or more of the above example techniques. That is, in certain examples, TAT anomaly detector 18 can determine a measured TAT anomaly condition in response to determining that any or more of the following conditions are satisfied (i.e., alone or in any combination): measured TAT 26 exceeds a threshold deviation from a theoretical TAT (e.g., ISA_TAT); a rate of change of a difference between measured TAT 26 and the theoretical TAT (e.g., ISA_TAT) with respect to time exceeds a threshold deviation rate; a ratio of a measured TAT rate to a theoretical TAT rate (e.g., $\frac{dTAT}{dISA\_TAT}$) exceeds a threshold ratio deviation; a measured SAT (e.g., $SAT_{measured}$) exceeds a threshold deviation from a theoretical SAT; and a rate of change of a difference between the measured SAT (e.g., $SAT_{measured}$) and the theoretical SAT with respect to time exceeds a threshold deviation rate.

Accordingly, techniques described herein can enable a computing device, such as computing device 10, to detect an anomalous (e.g., erroneous) measurement of TAT received from a temperature probe installed on an aircraft based on the measured TAT signal and a theoretical temperature (e.g., TAT and/or SAT). In this way, techniques of this disclosure can enable efficient detection of an anomaly condition corresponding to a measured TAT signal at a variety of flight conditions (e.g., using a ratio of a measured TAT rate to a theoretical TAT rate) based on determined theoretical values, thereby increasing robustness of error detection and facilitating system fault tolerance.

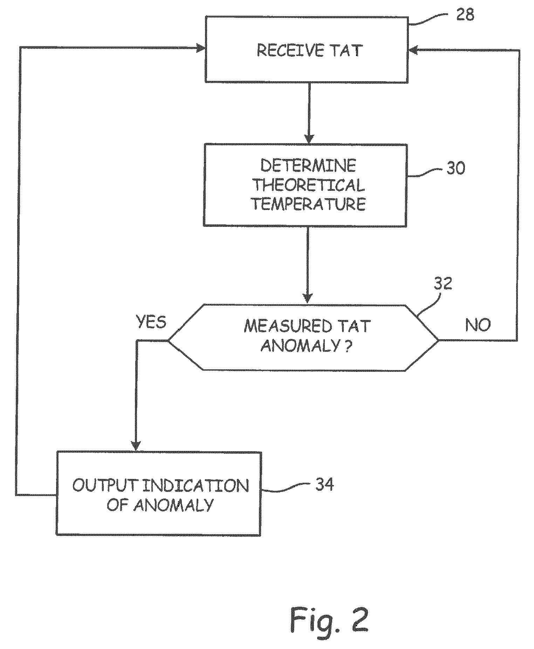

FIG. 2 is a flow diagram illustrating example operations to determine a measured TAT anomaly condition. For purposes of clarity and ease of discussion, the example operations are described below within the context of computing device 10 of FIG. 1.

An indication of a measured TAT can be received (28). For example, a temperature probe installed on an aircraft (e.g., a TAT probe) can measure a total air temperature of air surrounding the skin of the fuselage of the aircraft. The TAT probe can transmit an indication of the measured TAT to computing device 10, such as via one or more electrical and/or communicative connections between the TAT probe and computing device 10. Computing device 10 can receive measured TAT 26 from the TAT probe.

A theoretical temperature corresponding to conditions at which the TAT is measured can be determined (30). For example, TAT anomaly detector 18 can determine a theoretical SAT based on the ISA model according to Equation 1 above. TAT anomaly detector 18 can determine a theoretical TAT based on the ISA model according to Equations 1 and 2 above. While the example of FIG. 2 illustrates an indication of a measured TAT received (e.g., operation 28) before determining the theoretical temperature corresponding to conditions at which the TAT is measured (e.g., operation 30), it should be understood that aspects of this disclosure are not so limited. For instance, in some examples, a theoretical temperature corresponding to conditions at which the TAT is measured can be determined prior to or concurrent with the receiving of the measured TAT.

It can be determined whether a measured TAT anomaly condition is present (32). For example, TAT anomaly detector 18 can determine a measured TAT anomaly condition in response to determining that any or more of the following conditions are satisfied (i.e., alone or in any combination): measured TAT 26 exceeds a threshold deviation from a theoretical TAT (e.g., ISA_TAT); a rate of change of a difference between measured TAT 26 and the theoretical TAT (e.g., ISA_TAT) with respect to time exceeds a threshold deviation rate; a ratio of a measured TAT rate to a theoretical TAT rate (e.g., $\frac{dTAT}{dISA\_TAT}$) exceeds a threshold ratio deviation; a measured SAT (e.g., $SAT_{measured}$) exceeds a threshold deviation from a theoretical SAT; and a rate of change of a difference between the measured SAT (e.g., $SAT_{measured}$) and the theoretical SAT with respect to time exceeds a threshold deviation rate.

In examples where it is determined that a measured TAT anomaly condition is not present ("NO" branch of 32), computing device 10 can continue to receive an indication of the measured TAT (28). In examples where it is determined that a measured TAT anomaly condition is present, computing device 10 can output an indication of the measured TAT anomaly condition (34). For example, computing device 10 can output (e.g., via communication device 14) an indication of the presence of the measured TAT anomaly condition, an indication of a reason (e.g., fault or error code) for the determination of the measured TAT anomaly condition, or other indications corresponding to the measured TAT anomaly condition. The indications can be output to any one or more consuming systems, such as an automatic flight controls system, a flight management system, an electronic flight instrument system, an engine controls system, or any other system that receives, uses, or calculates parameters that are directly or indirectly dependent upon measured TAT signals. Computing device 10 can continue to receive the indication of the measured TAT from the temperature probe installed on the aircraft (28).

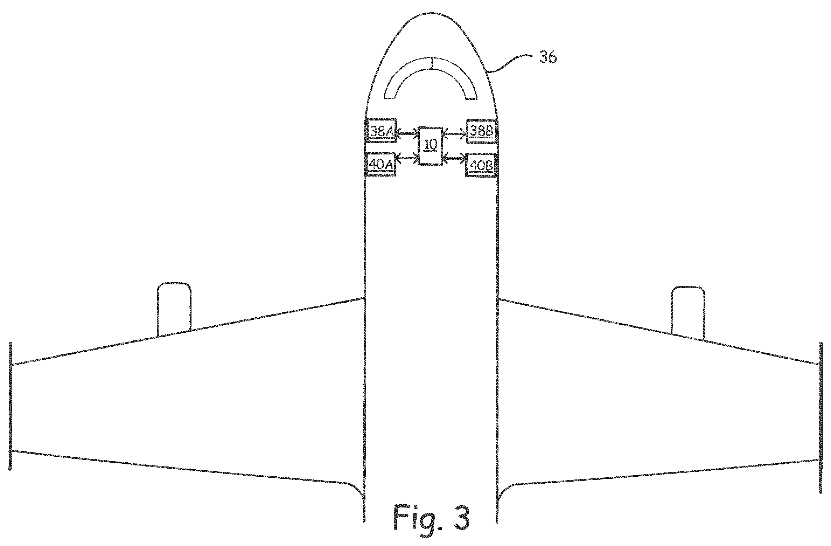

FIG. 3 is a schematic diagram illustrating an example of computing device 10 that can determine a measured TAT anomaly condition installed on aircraft 36. As illustrated in FIG. 3, aircraft 36 can include computing device 10, pitot-static probes 38A and 38B (collectively referred to herein as "pitot-static probes 38"), and TAT probes 40A and 40B (collectively referred to herein as "TAT probes 40").

Aircraft 36, while illustrated as a commercial transport aircraft, can be any kind of aircraft configured for flight at various altitudes and airspeeds. For instance aircraft 36 can be a military aircraft, a civil aircraft, an unmanned aircraft (often referred to as "drones"), or any other type of aircraft. Pitot-static probes 38 can be positioned at an exterior of aircraft 36 to sense static pressure (e.g., $P_s$) and/or total pressure (e.g., $P_t$) of air around the skin of the fuselage of aircraft 36. TAT probes 40 can be positioned at an exterior of aircraft 36 and can each include one or more temperature probes to sense TAT of the air around the skin of the fuselage. In certain examples, any one or more of TAT probes 40 can be positioned at locations such as an engine inlet. Computing device 10 (e.g., an ADC), can be positioned within the interior of aircraft 36, such as within an electronics bay, and coupled (e.g., electrically, communicatively, pneumatically, or otherwise coupled) to pitot-static probes 38 and TAT probes 40. In some examples, computing device 10 can be integrally formed with any one or more of pitot-static probes 38 and/or TAT probes 40. For instance, in some examples, there can be multiple computing devices 10, each integrally formed with and/or otherwise coupled with one of pitot-static probes 38 and/or TAT probes 40. In certain examples, any one or more of pitot-static probes 38 and TAT probes 40 can be integrally formed (often referred to as a "multi-function" probe that senses pitot pressure, static pressure, and TAT of the air around the skin of the fuselage). While illustrated in FIG. 3 as including two pitot-static probes 38 and two TAT probes 40, in other examples, aircraft 36 can include more or fewer than two of each of pitot-static probes 38 and TAT probes 40, such as one, three, four, or more of each. Similarly, aircraft 36 can include a different number of pitot-static probes 38 and TAT probes 40, such as four pitot-static probes 38 and three TAT probes 40.

Computing device 10, as described herein, can determine a measured TAT anomaly condition corresponding to a measured TAT signal received from any one or more of TAT probes 40. For instance, computing device 10 can determine a theoretical temperature (e.g., theoretical TAT and/or SAT) using total pressure and/or static pressure received from pitot-static probes 38. Computing device 10 can determine the measured TAT anomaly condition based on the received measured TAT and the determined theoretical temperature corresponding to the conditions at which the TAT is measured.

Accordingly, a computing device (e.g., an ADC) implementing techniques of this disclosure can determine a measured TAT anomaly condition corresponding to one or more erroneous measured TAT signals received from temperature probes installed on an aircraft. By comparing the measured TAT signal to a theoretical temperature, the computing device can determine the anomaly condition without requiring cross-comparisons of received TAT signals (i.e., cross comparisons of data received from multiple TAT probes). The computing device can determine the measured TAT anomaly condition at a plurality of flight conditions and during changes (e.g., rapid changes) of either or both of an altitude and Mach number of the aircraft. Accordingly, a computing device implementing techniques of this disclosure can enhance robustness of error detection of measured TAT signals and facilitate system fault tolerance.

The following are non-exclusive descriptions of possible embodiments of the present invention.

In one embodiment, a method includes receiving, by a computing device, an indication of a measured total air temperature (TAT) from a temperature probe installed on an aircraft. The method further includes determining, by the computing device, a theoretical temperature corresponding to conditions at which the TAT is measured, and determining, by the computing device, a measured TAT anomaly condition based on the measured TAT and the theoretical temperature corresponding to the measured TAT.

The method of the preceding paragraph can optionally include, additionally and/or alternatively, any one or more of the following features, configurations, operations, and/or additional components:

The theoretical temperature corresponding to the conditions at which the TAT is measured can include a theoretical TAT. Determining the theoretical temperature corresponding to the conditions at which the TAT is measured can include determining the theoretical TAT based on a measured altitude of the aircraft and a measured Mach number of the aircraft.

Determining the theoretical TAT based on the measured altitude of the aircraft and the measured Mach number of the aircraft can include determining an international standard atmosphere (ISA) TAT based on the measured altitude of the aircraft and the measured Mach number of the aircraft.

Determining the ISA TAT can include determining the ISA TAT according to the following equation:

$$ISA\_TAT = SAT \times (1 + 0.2 \times M^2);$$

where SAT is a static air temperature, and where M is the measured Mach number of the aircraft.

Determining the ISA TAT can further include determining SAT according to the following equation:

$$\text{IF (altitude} < 11{,}019 \text{ m)}$$

$$SAT = 15\ ^\circ C - 0.0065 \frac{^\circ C}{m} \times altitude$$

$$\text{ELSE IF (altitude} < 20{,}063 \text{ m)}$$

$$SAT = -56.5^\circ C$$

where altitude is the measured altitude of the aircraft in meters.

Determining the measured TAT anomaly condition can include determining the measured TAT anomaly condition in response to determining that the measured TAT exceeds a threshold deviation from the theoretical TAT.

The method can further include determining, by the computing device, a rate of change of a difference between the measured TAT and the theoretical TAT with respect to time. Determining the measured TAT anomaly condition can include determining the measured TAT anomaly condition in response to determining that the rate of change of the difference between the measured TAT and the theoretical TAT with respect to time exceeds a threshold deviation rate.

The method can further include determining, by the computing device, a measured TAT rate as a rate of change of the measured TAT with respect to time, determining, by the computing device, a theoretical TAT rate as a rate of change of the determined theoretical TAT with respect to time, and determining, by the computing device, a ratio of the measured TAT rate to the theoretical TAT rate. Determining the measured TAT anomaly condition can include determining the measured TAT anomaly condition in response to determining that the ratio of the measured TAT rate to the theoretical TAT rate exceeds a threshold ratio deviation.

The theoretical temperature corresponding to the conditions at which the TAT is measured can include a theoretical static air temperature (SAT). Determining the theoretical temperature corresponding to the conditions at which the TAT is measured can include determining the theoretical SAT based on a measured altitude of the aircraft.

Determining the theoretical SAT based on the measured altitude of the aircraft can include determining an international standard atmosphere (ISA) SAT based on the measured altitude of the aircraft.

Determining the ISA SAT can include determining the ISA SAT according to the following equation:

$$\text{IF (altitude} < 11{,}019 \text{ m)}$$

$$ISA\ SAT = 15\ ^\circ C - 0.0065 \frac{^\circ C}{m} \times altitude$$

$$\text{ELSE IF (altitude} < 20{,}063 \text{ m)}$$

$$ISA\ SAT = -56.5^\circ C$$

where altitude is the measured altitude of the aircraft in meters.

The method can further include determining, by the computing device, a measured SAT based on the received measured TAT and a measured Mach number of the aircraft according to the following equation:

$$SAT measured = \frac{TAT}{(1+0.2\times M^2)};$$

where TAT is the received measured TAT and M is the measured Mach number of the aircraft. Determining the measured TAT anomaly condition can include determining the measured TAT anomaly condition based on the measured SAT and the theoretical SAT.

Determining the measured TAT anomaly condition based on the measured SAT and the theoretical SAT can include determining the measured TAT anomaly condition in response to determining that the measured SAT exceeds a threshold deviation from the theoretical SAT.

The method can further include determining, by the computing device, a rate of change of a difference between the measured SAT and the theoretical SAT with respect to time. Determining the measured TAT anomaly condition based on the measured SAT and the theoretical SAT can include determining the measured TAT anomaly condition in response to determining that the rate of change of the difference between the measured SAT and the theoretical SAT with respect to time exceeds a threshold deviation rate.

In one embodiment, a computing device includes at least one processor and computer-readable memory. The computer-readable memory is encoded with instructions that, when executed by the at least one processor, cause the computing device to receive an indication of a measured total air temperature (TAT) from a temperature probe installed on an aircraft, and determine a theoretical temperature corresponding to conditions at which the TAT is measured. The computer-readable memory is further encoded with instructions that, when executed by the at least one processor, cause the computing device to determine a measured TAT anomaly condition based on the measured TAT and the theoretical temperature corresponding to conditions at which the TAT is measured.

The computing device of the preceding paragraph can optionally include, additionally and/or alternatively, any one or more of the following features, configurations,, instructions, operations, and/or additional components:

The theoretical temperature corresponding to the measured TAT can include a theoretical TAT. The instructions to determine the theoretical temperature corresponding to the conditions at which the TAT is measured can include instructions that, when executed by the at least one processor, cause the computing device to determine the theoretical TAT based on a measured altitude of the aircraft and a measured Mach number of the aircraft.

The instructions to determine the measured TAT anomaly condition can include instructions that, when executed by the at least one processor, cause the computing device to determine the measured TAT anomaly condition in response to determining that the measured TAT exceeds a threshold deviation from the theoretical TAT.

The computer-readable memory can be further encoded with instructions that, when executed by the at least one processor, cause the computing device to determine a rate of change of a difference between the measured TAT and the theoretical TAT with respect to time. The instructions to determine the measured TAT anomaly condition can include instructions that, when executed by the at least one processor, cause the computing device to determine the measured TAT anomaly condition in response to determining that the rate of change of the difference between the measured TAT and the theoretical TAT with respect to time exceeds a threshold deviation rate.

The computer-readable memory can be further encoded with instructions that, when executed by the at least one processor, cause the computing device to determine a measured TAT rate as a rate of change of the measured TAT with respect to time, determine a theoretical TAT rate as a rate of change of the determined theoretical TAT with respect to time, and determine a ratio of the measured TAT rate to the theoretical TAT rate. The instructions to determine the measured TAT anomaly condition can include instructions that, when executed by the at least one processor, cause the computing device to determine the measured TAT anomaly condition in response to determining that the ratio of the measured TAT rate to the theoretical TAT rate exceeds a threshold ratio deviation.

The theoretical temperature corresponding to the conditions at which the TAT is measured can include a theoretical static air temperature (SAT). The instructions to determine the theoretical temperature corresponding to the conditions at which the TAT is measured can include instructions that, when executed by the at least one processor, cause the computing device to determine the theoretical SAT based on a measured altitude of the aircraft. The computer-readable memory can be further encoded with instructions that, when executed by the at least one processor, cause the computing device to determine a measured SAT based on the received measured TAT and a measured Mach number of the aircraft. The instructions to determine the measured TAT anomaly condition can include instructions that, when executed by the at least one processor, cause the computing device to determine the measured TAT anomaly condition based on at least one of: a comparison of the measured SAT to the theoretical SAT; and a comparison of a rate of change of a difference between the measured SAT and the theoretical SAT with respect to time to a threshold deviation rate.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. A method comprising:

   receiving, by a computing device (10), an indication of a measured total air temperature (26) (TAT) from a temperature probe installed on an aircraft;
   determining, by the computing device (10), a theoretical temperature corresponding to conditions at which the TAT is measured; and
   determining, by the computing device (10), a measured TAT anomaly condition based on the measured TAT and the theoretical temperature corresponding to the measured TAT.

2. The method of claim 1,
   wherein the theoretical temperature corresponding to the conditions at which the TAT is measured comprises a theoretical TAT; and
   wherein determining the theoretical temperature corresponding to the conditions at which the TAT is measured comprises determining the theoretical TAT based on a measured altitude of the aircraft and a measured Mach number of the aircraft.

3. The method of claim 2, wherein determining the theoretical TAT based on the measured altitude of the aircraft and the measured Mach number of the aircraft comprises determining an international standard atmosphere (ISA) TAT based on the measured altitude of the aircraft and the measured Mach number of the aircraft.

4. The method of claim 3, wherein determining the ISA TAT comprises determining the ISA TAT according to the following equation:

$$ISA\_TAT = SAT \times (1 + 0.2 \times M^2);$$

   wherein SAT is a static air temperature; and
   wherein M is the measured Mach number of the aircraft.

5. The method of claim 4, wherein determining the ISA TAT further comprises determining SAT according to the following equation:

   IF (altitude <11,019m)

$$SAT = 15\,°C - 0.0065\frac{°C}{m} \times altitude$$

   ELSE IF (altitude < 20,063 m)

$$SAT = -56.5°C$$

   wherein altitude is the measured altitude of the aircraft in meters.

6. The method of claim 2, wherein determining the measured TAT anomaly condition comprises determining the measured TAT anomaly condition in response to determining that the measured TAT exceeds a threshold deviation from the theoretical TAT.

7. The method of claim 2, further comprising:

determining, by the computing device (10), a rate of change of a difference between the measured TAT (26) and the theoretical TAT with respect to time;

wherein determining the measured TAT anomaly condition comprises determining the measured TAT anomaly condition in response to determining that the rate of change of the difference between the measured TAT (26) and the theoretical TAT with respect to time exceeds a threshold deviation rate.

8. The method of claim 2, further comprising:

determining, by the computing device (10), a measured TAT rate as a rate of change of the measured TAT with respect to time;

determining, by the computing device (10), a theoretical TAT rate as a rate of change of the determined theoretical TAT with respect to time; and

determining, by the computing device (10), a ratio of the measured TAT rate to the theoretical TAT rate;

wherein determining the measured TAT anomaly condition comprises determining the measured TAT anomaly condition in response to determining that the ratio of the measured TAT rate to the theoretical TAT rate exceeds a threshold ratio deviation.

9. The method of claim 1,

wherein the theoretical temperature corresponding to the conditions at which the TAT is measured comprises a theoretical static air temperature (SAT); and

wherein determining the theoretical temperature corresponding to the conditions at which the TAT is measured comprises determining the theoretical SAT based on a measured altitude of the aircraft.

10. The method of claim 9, wherein determining the theoretical SAT based on the measured altitude of the aircraft comprises determining an international standard atmosphere (ISA) SAT based on the measured altitude of the aircraft.

11. The method of claim 10, wherein determining the ISA SAT comprises determining the ISA SAT according to the following equation:

$$\text{IF (altitude} < 11{,}019 \text{ m)}$$

$$ISA\ SAT = 15\ {}^\circ C - 0.0065 \frac{{}^\circ C}{m} \times altitude$$

$$\text{ELSE IF (altitude} < 20{,}063 \text{ m)}$$

$$ISA\ SAT = -56.5 {}^\circ C$$

wherein altitude is the measured altitude of the aircraft in meters.

12. The method of claim 9, further comprising:

determining, by the computing device (10), a measured SAT based on the received measured TAT and a measured Mach number of the aircraft according to the following equation:

$$SATmeasured = \frac{TAT}{(1 + 0.2 \times M^2)};$$

wherein TAT is the received measured TAT (26);

wherein M is the measured Mach number of the aircraft; and

wherein determining the measured TAT anomaly condition comprises determining the measured TAT anomaly condition based on the measured SAT and the theoretical SAT.

13. The method of claim 12, wherein determining the measured TAT anomaly condition based on the measured SAT and the theoretical SAT comprises determining the measured TAT anomaly condition in response to determining that the measured SAT exceeds a threshold deviation from the theoretical SAT.

**14.** The method of claim 12, further comprising:

determining, by the computing device, a rate of change of a difference between the measured SAT and the theoretical SAT with respect to time;
wherein determining the measured TAT anomaly condition based on the measured SAT and the theoretical SAT comprises determining the measured TAT anomaly condition in response to determining that the rate of change of the difference between the measured SAT and the theoretical SAT with respect to time exceeds a threshold deviation rate.

**15.** A computing device (10) comprising:

at least one processor (12); and
computer-readable memory (16) encoded with instructions that, when executed by the at least one processor (12), cause the computing device (10) to:

receive an indication of a measured total air temperature (TAT) from a temperature probe installed on an aircraft;
determine a theoretical temperature corresponding to conditions at which the TAT is measured; and
determine a measured TAT anomaly condition based on the measured TAT and the theoretical temperature corresponding to the conditions at which the TAT is measured.

COMPUTING DEVICE

10

22

$P_s$

24

$P_t$

26

TAT

PROCESSOR(S)

12

COMMUNICATION
DEVICE(S)

14

STORAGE DEVICE(S)

16

TAT ANOMALY
DETECTOR

18

Fig. 1

Fig. 2

36

38B

10

40B

38A

40A

Fig. 3

Europäisches
Patentamt

European
Patent Office

Office européen
des brevets

## EUROPEAN SEARCH REPORT

Application Number

EP 16 17 5711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/231639 A1 (HARPER RICHARD E [US] ET AL) 19 October 2006 (2006-10-19) * paragraphs [0007], [0023] - [0026], [0028], [0030], [0031], [0034], [0037] * ----- | 1-15 | INV. G01K13/02 G01K15/00 |
| A | GOODRICH: "Goodrich Total Temperature Sensors", TECHNICAL REPORT,, no. 5755, 1 January 1994 (1994-01-01), pages 1-32, XP007915782, * Equation 1; paragraph [0009] * ----- | 1-15 | |
| A | US 2015/052994 A1 (DUPONT DE DINECHIN SEBASTIEN [FR]) 26 February 2015 (2015-02-26) * paragraphs [0053], [0054], [0164] - [0166] * ----- | 1-15 | |
| | | | TECHNICAL FIELDS SEARCHED (IPC) G01K G05B G05D |

The present search report has been drawn up for all claims

| Place of search | Date of completion of the search | Examiner |
|---|---|---|
| The Hague | 2 November 2016 | Phleps, Stefanie |

EPO FORM 1503 03.82 (P04C01)

## ANNEX TO THE EUROPEAN SEARCH REPORT
## ON EUROPEAN PATENT APPLICATION NO.

EP 16 17 5711

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2016

| Patent document cited in search report | | Publication date | Patent family member(s) | | Publication date |
|---|---|---|---|---|---|
| US 2006231639 | A1 | 19-10-2006 | NONE | | |
| US 2015052994 | A1 | 26-02-2015 | FR | 2988851 A1 | 04-10-2013 |
| | | | US | 2015052994 A1 | 26-02-2015 |
| | | | WO | 2013144157 A1 | 03-10-2013 |

EPO FORM P0459

For more details about this annex : see Official Journal of the European Patent Office, No. 12/82